## Europäisches Patentamt

(19) **European Patent Office**

**Office européen des brevets**

(11) Publication number: **0 190 785**
**B1**

(12) ## EUROPEAN PATENT SPECIFICATION

(45) Date of publication of the patent specification:
24.05.89

(51) Int. Cl.⁴: **F02B 57/00, F02B 53/08**

(21) Application number: **86200085.8**

(22) Date of filing: **21.01.86**

(54) Rotary engine.

(30) Priority: **05.02.85 SE 8500516**

(43) Date of publication of application:
**13.08.86 Bulletin 86/33**

(45) Publication of the grant of the patent:
**24.05.89 Bulletin 89/21**

(84) Designated Contracting States:
**AT BE CH DE FR GB IT LI NL**

(56) References cited:
**FR-A- 357 427**
**GB-A- 354 882**
**US-A- 3 117 562**
**US-A- 3 401 676**

(73) Proprietor: **Zetterlund, Karl, Klimatgatan 10,
S-371 51 Karlskrona(SE)**

(72) Inventor: **Zetterlund, Karl, Klimatgatan 10,
S-371 51 Karlskrona(SE)**

(74) Representative: **Nydell, Peder, Nydells Patentbyra
Storgatan 57, S-392 31 Kalmar(SE)**

ACTORUM AG

## Description

### TECHNICAL FIELD

The present invention relates to a rotary engine, comprising a housing containing a working space for a working fluid, the working space being formed by two chambers being circular in cross-section and intersecting each other, a main rotor being mounted in one of said chambers and provided with a plurality of radially extending cams and interspaces therebetween, and a supplementary rotor being mounted in the other chamber and provided with a plurality of radially extending grooves and interspersed cams capable of intermeshing with the cams of the main rotor.

### BACKGROUND ART

A rotary engine of the above type is known from US-A 3 401 676. In that engine the two rotors are operatively connected to one another by synchronizing gears. Since the rotors are always interengaged such that they rotate continously, there will be relatively small compression and expansion volumes and a relatively low degree of compression, which may cause difficulties in controlling the operation of the engine. Additionally, the known engine requires a complicated and expensive construction. FR-A 357 427 shows an engine where the two rotors are operatively connected to one another by an eccentric device, which adversely affects the compression and controllability of the engine.

### SUMMARY OF THE INVENTION

The object of the present invention is, therefore, to provide a rotary engine of the aforesaid kind which is of simple construction and which enables the use of a larger degree of compression in every compression phase and thus an enlarged torque effect. This object is achieved by the engine constructed in accordance with the present invention and having the characteristic features set forth in Claim 1.

Further developments of the invention are set forth in the depending claims.

In the engine in accordance with the invention the cams of the main rotor interengage with the cams of the supplementary rotor only intermittently during rotation of the main rotor, such that the supplementary rotor will be rotated in steps between stationary predetermined rest positions. Because the interspaces between the cams of the main rotor consecutively in turn form an expansion room together with a respective one of the grooves of the supplementary rotor which is stationary in its rest position, a considerably greater compression will be achieved during each compression phase.

### BRIEF DESCRIPTION OF THE DRAWINGS

The invention will be described in more detail with reference to a preferred embodiment thereof illustrated in the accompanying drawings, in which:

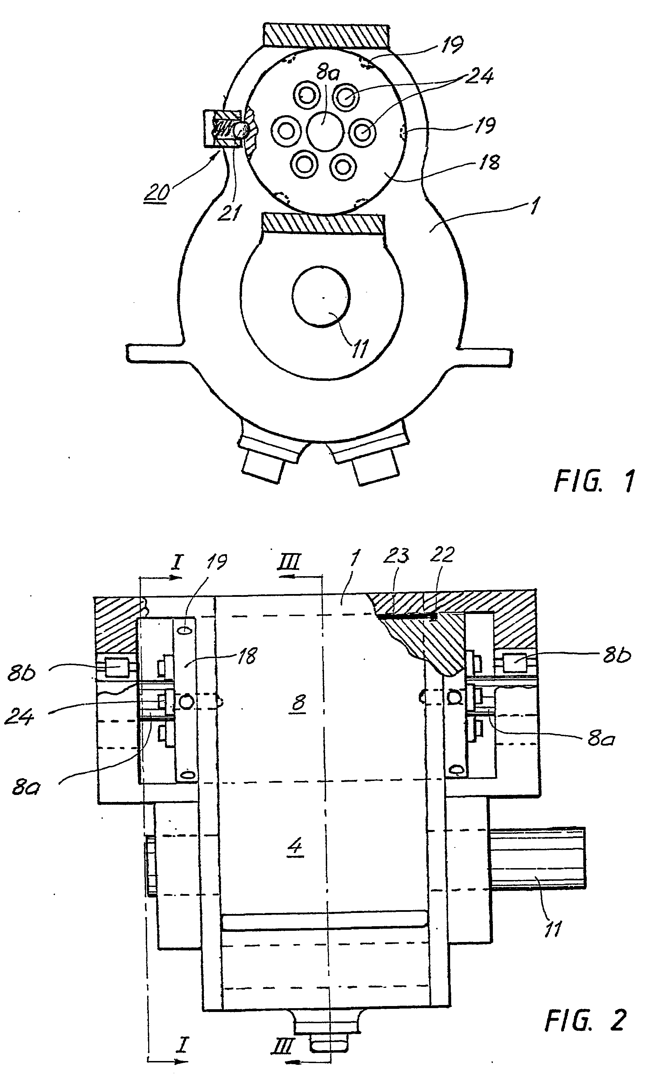

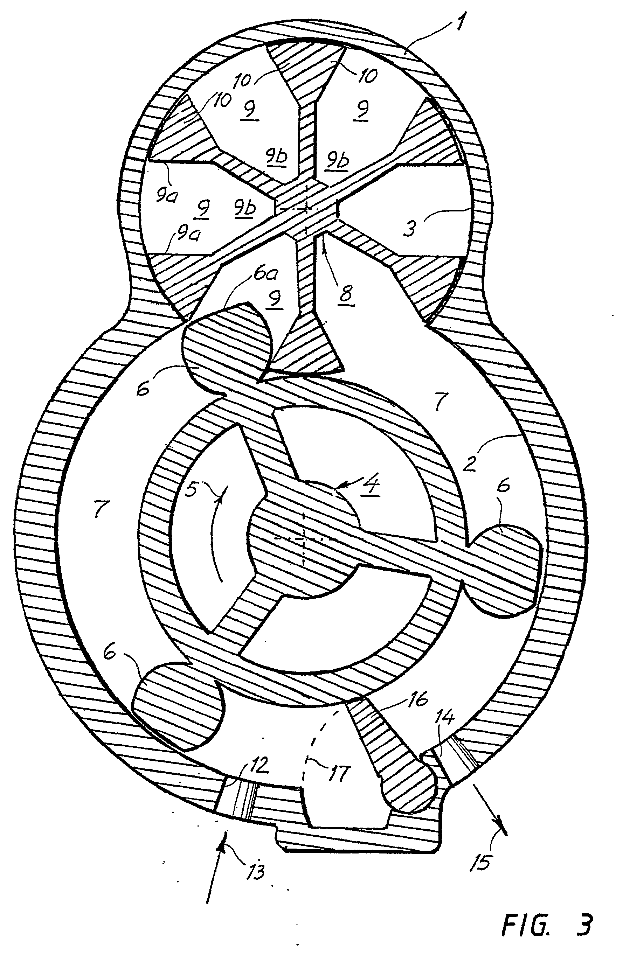

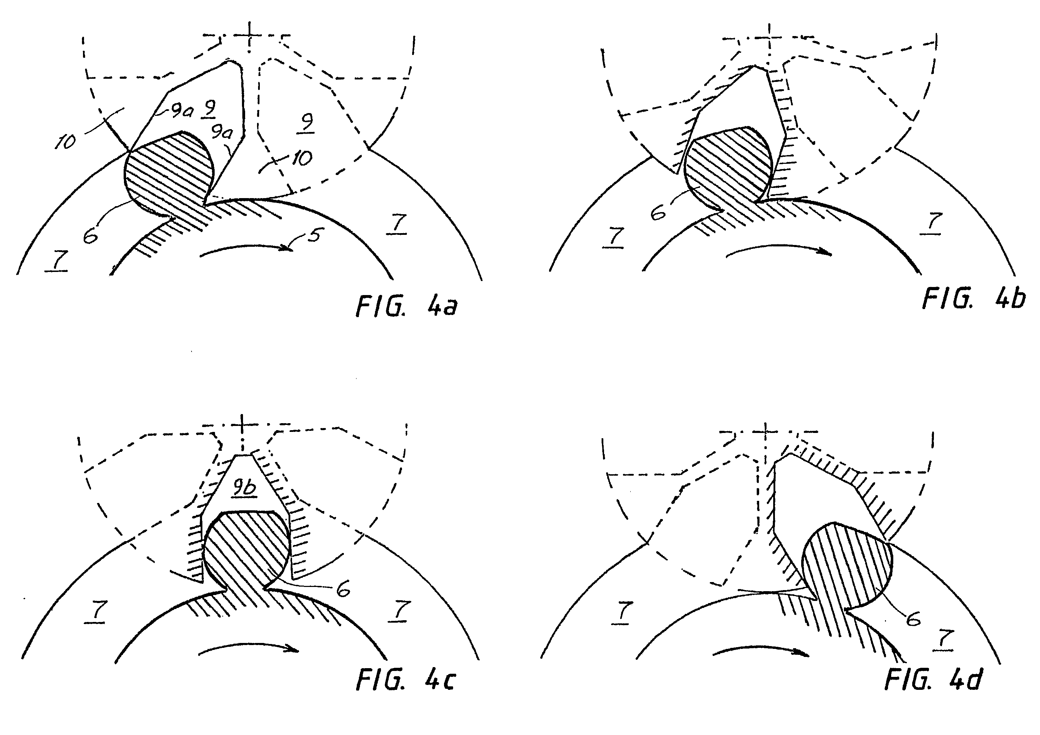

Fig. 1 is an end view, partially in cross-section, of an engine in accordance with the invention. Fig. 2 is a side view, partially in cross-section of the engine in accordance with Fig. 1, where a cross-section along the line I-I in Fig. 2 corresponds to the partially cross-sectional view of Fig. 1. Fig. 3 is a cross-section in enlarged scale along the line III-III of Fig. 2. Figs. 4 a-d schematically illustrate four different working phases of the engine.

### DESCRIPTION OF A PREFERRED EMBODIMENT

The engine, see Figs. 1-3, includes a housing 1 containing a working space for a working fluid, for example a gas mixture, said working space being formed by two chambers 2 and 3 having a circular cross-section and intersecting one another. A main rotor 4 is arranged in the chamber 2 and rotatably mounted in a clockwise direction of the arrow 5. The main rotor 4 is provided with a plurality (three in the embodiment shown) of radially extending cams 6 having interspaces 7 therebetween. The cams 6 have a circular cross-section, see Fig. 3, the top portion 6a of which is intercepted to form an arc of a circle having its center coinciding with the center of the rotor chamber 2 such that the cams 6 can slide along the inner wall of the rotor chamber 2.

A supplementary rotor 8 is mounted within the chamber 3 and provided with a plurality (six in the embodiment shown) radially extending grooves 9. The walls of the grooves 9 form cams 10 capable of intermeshing or interengaging with the cams 6 of the main rotor 4.

The supplementary rotor 8 is rigidly mounted on a shaft 8a being rotatably journaled in the housing 1 by means of a bearing 8b.

The grooves 9, see Fig. 3, are provided with two mutually parallel side walls 9a extending from the opening of the grooves 9 and each being located in an individual radial plan of the supplementary rotor 8.

The side walls 9a of each groove 9 are spaced from one another at a distance being equal to the diameter of the cams 6 of the main rotor. The innermost portion 9b of the grooves 9 is inwardly conically tapered.

The main rotor 4 is rigidly mounted on an output shaft 11 which is rotatably journaled in the housing 1 and which constitutes the driving shaft of the engine. The supplementary rotor 8, which is intermittently driven by the main rotor 4 between predetermined rest positions, has no output shaft.

The lower portion of the housing 1 is provided with an inlet port 12, see Fig. 3, for sucking injection of gas in the direction of the arrow 13, and an outlet port 14 for the exhaust of used gas in the direction of the arrow 15. The ports 12 and 14 are separated from one another by means of a baffle 16. This baffle is biased and retained in its closed position, shown in Fig. 3, by means of a spring, not shown. The baffle 16 can swing (as is shown in dotted line 17) against the action of said spring by means of the rotor cams 6 to an open position after the end of each exhaust stroke. After passage of the rotor cam 6 the baffle 16 will shut again by means of said spring.

Alternatively, the baffle 16 may be designed to open by means of an outer cam (not shown) which may be mounted on the driving shaft 11.

The supplementary rotor 8 has cylindrical ends 18, the shell surface of which having recesses 19 for locking the supplementary rotor in predetermined rest positions.

The locking is performed by means of a locking means being mounted in the housing 1 and having the shape of a ball lock 20 which is provided with a spring biassed ball 21 capable of snapping into one of said recesses 19 and thus retain the supplementary rotor in one of several possible predetermined rest positions. The ball lock 20 is designed to be capable of retaining the supplementary rotor against the action of the gas pressure in the cam interspace 7, but not capable of withstanding the driving force of the cam 6.

The shell surface of the rotor ends 18 is covered by a sealing layer 22 made from teflon, for instance. A sealing strip 23, made from teflon, for instance, is also provided at the center of each wall that separates the rotor grooves 9. The layer 22 and the strip 23 thereby constitute closed and entirely sealed spaces between each rotor groove 9.

The main rotor 4 is preferably sealed by means of elongated sealing strips (not shown) at the tops 6a of the rotor cams and by means of circular sealings (not shown) on the rotor sides, these sealing strips and sealings being interconnected by means of a suitably designed strip or sealing ring (not shown) on the ends of the rotor chamber 2.

The rotor ends 18 are provided with fuel injection valves or spark-plugs 24, one or two for each rotor groove 9. When using direct injection (diesel operation) the engine is provided with special injection valves (pump and injection valve in combination) being supplied with fuel via the shaft ends of the supplementary rotor 8, said ends thereby being provided with bores and bored passageways to each valve in the end of the rotor. Setting of time and fuel quantity will then be performed mechanically by means of an arrangement of a lever and a cam on the shaft of the main rotor. When using carburettor/injection in sucking phase the rotor ends are instead provided with spark-plugs, which obtain ignition voltage via trailing contacts.

The operation of the engine is apparent from Figs. 3-4, and is explained in more detail below.

Gas that enters the port 12 will consecutively fill the cam interspaces 7 of the main rotor and will be carried by the cams 6 in the direction of the arrow 5 upwards to a waiting groove 9 on the supplementary rotor which is retained in the position shown in Figs. 3 and 4a by means of the ball lock 20. The cam interspace 7 and the groove 9 thereby together form a compression space, the volume of which is gradually reduced during the movement of the cam 6. When the cam 6 enters the groove 9 of the supplementary rotor, see Figs. 3 and 4a, the cam 6 will slide along the parallel walls 9a. Because the distance between the walls 9a are equal to the diameter of the cam 6, the compressed gas volume will be retained within the groove 9 and will be carried to an expansion position (Fig.4d). The volume of the compressed gas has a minimum when the cam 6 has reached a symmetric position in the groove 9, see Fig. 4c, where the gas volume substantially is equal to the volume of the conical portion 9b of the groove 9. Fuel injection or ignition of the gas is suitably set to occur when the volume of the compressed gas has a minimum, or soon thereafter.

Accordingly, the cam 6 drives the supplementary rotor from the position shown in Fig. 4a to the position shown in Fig. 4d, where the ball lock 20 locks the supplementary rotor against any further rotation.

The compressed gas is, after combustion and expansion, see Fig. 3, transported by the cams 6 out through the exhaust port 14.

Simultaneously with said rotation of the supplementary rotor from the position shown in Fig. 4a to the position shown in Fig. 4d, a subsequent one of the cam interspaces 7 of the main rotor 4 has reached a position for a compression phase. The cams 6 of the main rotor therefore drives the supplementary rotor intermittently (stepwise) to a new position.

It should be noted that the gas in the groove 9 during the compression phase acts to the same extent on the two walls 9a, and hence the gas does not impart any appreciable torque on the supplementary rotor 8.

Gas that may leak past the cam 6 during turnover phase from compression to expansion will, because of the disclosed and shown construction with three cams 6, leak back and return to the subsequent cam interspace 7 during the compression phase, and the gas will, during rotation to the expansion phase, join the combustion in the preceding expansion phase, and will, therefore, not give any appreciable loss of power.

The intermittent engagement between the cams of the main rotor and of the supplementary rotor is, in the embodiment shown, achieved as a result of the number of cams 6 on the main rotor being less than the number of cams 10 on the supplementary rotor 8.

**Claims**

1. A rotary engine, comprising a housing (1) containing a working space for a working fluid, the working space being formed by two chambers (2, 3) being circular in cross-section and intersecting one another, a main rotor (4) being mounted in one of said chambers and provided with a plurality of radially extending cams (6) and interspaces (7) therebetween, and a supplementary rotor (8) being mounted in the other chamber and provided with a plurality of radially extending grooves (9) and interspersed cams (10) capable of intermeshing with the cams of the main rotor, characterized in that the cams (6, 10) of the main rotor and of the supplementary rotor are designed such that said intermeshing occur only intermittently during a rotation of the main rotor (4), and such that the supplementary rotor (8) will be driven stepwise, under the influence of said intermeshing, by the main rotor during its rotation, the stepwise rotation of the supplementary rotor (8) being performed between predetermined rest positions for the supplementary rotor, the cam interspaces being arranged to consecutively form an expansion room for the working fluid together with one of the grooves of the supplementary rotor and a compression room for the working fluid together with a subsequent groove of the supplementary rotor in each such rest position, said rest positions being defined by locking means (20), the locking force of which being dimensioned to hold the supplementary rotor (8) against the action of the pressure of the working fluid in the compression room, but the locking force of which is dimensioned to be overcome by the dogging movement of the cams of the main rotor.

2. An engine in accordance with Claim 1, characterized in that the intermittent intermeshing between the cams of the main rotor and of the supplementary rotor is accomplished as a result of the number of cams of the main rotor (4) being less than the cams of the supplementary rotor (8).

3. An engine in accordance with any one of the preceding Claims, characterized in that said housing (1) is provided with an intake port (12) for a sucking injection of a working fluid, and an exhaust port (14) for the exhaust of used working fluid, the ports being separated from one another by a spring biassed baffle (16) being displaceable by one of the cams (6) of the main rotor.

4. An engine in accordance with any one of the preceding Claims, characterized in that each one of the grooves (9) of the supplementary rotor (8) has two mutually parallel side walls (9a) being spaced from one another a distance corresponding to the diameter of the cams (6) of the main rotor.

**Patentansprüche**

1. Rotationsmaschine, die aufweist ein Gehäuse (1), das einen Arbeitsraum für ein Arbeitsfluid enthält, wobei der Arbeitsraum aus zwei Kammern (2, 3) gebildet ist, die im Querschnitt kreisförmig sind und sich gegenseitig schneiden, einen Hauptrotor (4), der in einer der Kammern untergebracht ist und mit einer Vielzahl von radial abstehenden Nocken (6) und Zwischenräumen (7) dazwischen versehen ist, und einen Hilfsrotor (8), der in der anderen Kammer untergebracht ist und mit einer Vielzahl von radial verlaufenden Vertiefungen (9) und dazwischen liegenden Nocken (10) versehen ist, die mit den Nocken des Hauptrotors ineinandergreifen können, dadurch gekennzeichnet, daß die Nocken (6, 10) des Hauptrotors und des Hilfsrotors so ausgelegt sind, daß das Ineinandergreifen nur intermittierend während einer Drehung des Hauptrotors (4) auftritt, und so, daß der Hilfsrotor (8) schrittweise angetrieben wird, und zwar unter dem Einfluß des Ineinandergreifens, durch den Hauptrotor während seiner Drehung, wobei die schrittweise Drehung des Hilfsrotors (8) zwischen vorgegebenen Ruhepositionen für den Hilfsrotor durchgeführt wird, und wobei die Nockenzwischenräume so angeordnet sind, daß sie hintereinanderfolgend einen Expansionsraum für das Arbeitsfluid zusammen mit einer der Vertiefungen des Hilfsrotors und einen Kompressionsraum für das Arbeitsfluid zusammen mit einer nachfolgenden Vertiefung des Hilfsrotors bilden, und zwar in jeder Ruheposition, wobei die Ruhepositionen durch Sperrmittel (20) bestimmt sind, deren Sperrkraft ausgelegt ist, um den Hilfsrotor (8) gegen die Wirkung des Drucks des Arbeitsfluids in dem Kompressionsraum zu halten, und wobei deren Sperrkraft ausgelegt ist, um durch die anschlagende Bewegung der Nocken des Hauptrotors überwunden zu werden.

2. Maschine nach Anspruch 1, dadurch gekennzeichnet, daß das intermittierende Ineinandergreifen der Nocken des Hauptrotors und des Hilfsrotors ausgeführt wird als ein Ergebnis davon, daß die Anzahl der Nocken des Hauptrotors (4) kleiner ist als die Nockenanzahl des Hilfsrotors (8).

3. Maschine nach einem der vorhergehenden Ansprüche, dadurch gekennzeichnet, daß das Gehäuse (1) versehen ist mit einem Einlaßkanal (12) für ein Ansaugeinspritzen eines Arbeitsfluids und mit einem Auslaßkanal (14) für das Auslassen des gebrauchten Arbeitsfluids, wobei die Kanäle voneinander getrennt sind durch eine federbelastete Drosselklappe (16), die durch eine der Nocken (6) des Hauptrotors ausgelenkt werden kann.

4. Maschine nach einem der vorhergehenden Ansprüche, dadurch gekennzeichnet, daß jede der Vertiefungen (9) des Hilfsrotors (8) zwei gegenseitig zueinander parallele Seitenwände (9a) aufweist, die voneinander mit einem Abstand entfernt sind, der dem Durchmesser der Nocken (8) des Hauptrotors entspricht.

**Revendications**

1. Moteur rotatif comprenant un carter (1) contenant un espace de travail destiné à recevoir un fluide de travail, l'espace de travail étant constitué par deux chambres (2, 3) de section transversale circulaire et se coupant l'une l'autre, un rotor principal (4) étant monté dans l'une de ces chambres et muni d'un certain nombre de cames radiales (6) séparées par des espaces intermédiaires (7), et un rotor supplémentaire (8) étant monté dans l'autre chambre et muni d'un certain nombre de rainures radiales (9) et de cames intercalées (10) capables de s'engréner avec les cames du rotor principal, moteur rotatif caractérisé en ce que les cames (6, 10) du rotor principal et du rotor supplémentaire sont conçus de façon que leur engrènement ne se produire que de manière intermittente pendant une rotation du rotor principal (4), et de façon que le rotor supplémentaire (8) soit entraîné pas à pas, sous l'action de cet engrènement, par le rotor principal pendant sa rotation, la rotation pas à pas du rotor supplémentaire (8) étant effectuée entre des positions de repos prédéterminées du rotor supplémentaire, les espaces entre cames étant disposés pour former consécutivement une chambre d'expansion du fluide de travail avec l'une des rainures du rotor supplémentaire, et une chambre de compression du fluide de travail avec une rainure suivante du rotor supplémentaire dans chacune des positions de repos, ces positions de repos étant définies par des moyens de blocage (20) dont la force de blocage est calculée pour retenir le rotor supplémentaire (8) contre l'action de la pression du fluide de travail contenu dans la chambre de compression, mais dont la force de blocage est déterminée de manière à être surmontée par le mouvement de poursuite des cames du rotor principal.

2. Moteur selon la revendication 1, caractérisé en ce que l'engrènement intermittent entre les cames du rotor principal et celles du rotor supplémentaire, est obtenu du fait que le nombre de cames du rotor principal (4) est inférieur au nombre de cames du rotor supplémentaire (8).

3. Moteur selon l'une quelconque des revendications précédentes, caractérisé en ce que le carter (1) est muni d'un orifice d'admission (12) pour l'injection par aspiration d'un fluide de travail, et d'un orifice d'échappement (14) pour l'échappement du fluide de travail usé, les orifices étant séparés l'un de l'autre par un clapet (16) pouvant être déplacé par l'une des cames (6) du rotor principal.

4. Moteur selon l'une quelconque des revendications précédentes, caractérisé en ce que chacune des rainures (9) du rotor supplémentaire (8) comporte deux parois latérales mutuellement parallèles (9a), séparées l'une de l'autre par une distance correspondant au diamètre des cames (6) du rotor principal.

FIG. 1

FIG. 2

FIG. 3

EP 0 190 785 B1

FIG. 4b

FIG. 4d

FIG. 4a

FIG. 4c